# FASCICULE DE BREVET EUROPEEN

(11) **EP 1 805 092 B1**
(45) Date de publication et mention de la délivrance du brevet: **02.03.2011**
(21) Numéro de dépôt: 05812313.4
(22) Date de dépôt: 21.10.2005
(51) Int. Cl.: B65G 51/03, B65G 47/14

(54) **CONVOYEUR ASSOCIE A UNE MACHINE D APPRET UTILISEE POUR ORIENTER DES OBJETS**
FÖRDERBAND FÜR EINE FERTIGUNGSMASCHINE ZUR AUSRICHTUNG VON OBJEKTEN
CONVEYOR FOR A FINISHING MACHINE USED TO ORIENT OBJECTS

(30) Priorité: 25.10.2004 FR 0411336
(43) Date de publication de la demande: 11.07.2007
(73) Titulaire: Sidel Participations, 76930 Octeville Sur Mer (FR)
(72) Inventeur: DOTSON, Sean, F-76930 Octeville sur Mer (FR); KLAWONN, Bill, décédé (FR); LORANGE, Stéphane, F-76930 Octeville sur Mer (FR); MATHIS, Samuel, F-76930 Octeville sur Mer (FR); ROBERTSON, Doug, F-76930 Octeville sur Mer (FR); ROTH, Emmanuel, F-76930 Octeville sur Mer (FR); WAELDIN, Gilles, F-76930 Octeville sur Mer (FR); WELTER, Curt, F-76930 Octeville sur Mer (FR)
(74) Mandataire: Cabinet Plasseraud
(86) Numéro de dépôt international: PCT/FR2005/002615
(87) Numéro de publication internationale: WO 2006/045928

(56) Documents cités:
- EP-A- 0 699 605
- US-A- 3 105 720
- US-A- 4 735 343

## Description

La présente invention concerne un convoyeur associé à une machine d'apprêt utilisée pour orienter des objets et, plus particulièrement un dispositif convoyeur qui réalise l'acheminement d'objets du genre capsules, couvercles, bouchons...etc.. en sortie d'une machine d'apprêt.

La présente invention concerne également les machines d'apprêt munies de ce dispositif convoyeur.

Ces machines d'apprêt, appelées communément « cap feeder», reçoivent les objets en vrac et, par des moyens appropriés, elles effectuent automatiquement une manipulation de ces objets pour les orienter tous de la même façon et ensuite ces objets orientés comme, par exemple, des bouchons, sont acheminés jusqu'à un poste d'utilisation.

Les problèmes rencontrés avec ces machines, comme détaillés ci-après, concernent essentiellement des machines d'apprêt de bouchons en vue de leur utilisation dans des installations et chaînes d'embouteillage ; aussi, dans la suite de la description et pour simplifier les choses, il sera essentiellement question de bouchons et d'embouteillage sans que ceci puisse être interprété comme une limitation de la portée de la présente invention.

Ces machines d'apprêt ont besoin d'être alimentées régulièrement en bouchons a orienter. Elles doivent pouvoir être approchées par un opérateur et/ou par des moyens appropriés pour permettre le chargement de leur trémie avec des bouchons en vrac.

Leur situation sur le site d'embouteillage ne doit pas non plus être une source de difficultés ou de complications pour réaliser de simples opérations d'entretien ou tous autres travaux, ni être une source de perturbations pour le site lui-méme en générant des poussières ou autres qui meuvent dégrader le contenu des bouteilles.

II n'est pas rare en effet de trouver certaines de ces machines, comme par exemple des machines d'apprêt du type à bol vibrant, installées au-dessus du poste d'embouteillage, de façon à limiter, voire supprimer tout système de convoyage entre lesdites machines et le poste d'utilisation des bouchons orientées ; mais ce type de machine et ce type d'installation cumulent les difficultés et inconvénients précités.

Pour certaines applications, comme le convoyage de canettes, qui est décrit dans le document US 3 105 720, il est connu d'utiliser un convoyeur vertical du type pneumatique.

Les machines d'apprêt du type à tapis sans fin vertical sont le plus souvent installée au sol car elles peuvent réaliser, en plus du tri et de l'orientation des bouchons, grâce à leur tapis, au moins une partie du convoyage desdits bouchons orientés en les amenant à une certaine hauteur selon les besoins. Ce convoyage est en effet réalisé au moyen de leur tapis d'apprêt qui s'élève verticalement à une hauteur variable, choisie en fonction de l'installation et de l'emplacement de la machine.

Pour ce type de machines d'apprêt, le tapis comporte des tasseaux qui prélèvent les bouchons dans la trémie de la machine où ils sont disposés en vrac. Les bouchons sont extraits de la trémie par le mouvement du tapis en se logeant dans des rainures délimitées par ledit tapis et les tasseaux.

Le tapis est aménagé et guidé de façon à éjecter automatiquement les bouchons qui n'ont pas la bonne orientation, lesquels bouchons mal orientés retombent tout simplement dans la trémie. Ensuite les bouchons restants, c'est-à-dire ceux qui sont bien orientés, sont extraits des rainures du tapis et ils sont véhiculés vers le poste d'embouteillage, par des moyens appropriés qui font la liaison entre le site de la machine d'apprêt et ledit poste d'embouteillage.

Le coût de ces machines d'apprêt du type à tapis est relativement élevé en raison notamment du coût de leur tapis qui grimpe en même temps que s'élève le niveau de livraison des bouchons orientés par ledit tapis.

La présente invention propose un matériel avantageux sur plusieurs plans pour ces machines d'apprêt du type à tapis, à bol vibrant et aussi pour des machines du type centrifuge.

Ce matériel apporte des améliorations qui concernent l'environnement des postes d'embouteillage et il apporte en particulier une suppression, comme c'est le cas notamment avec les machines du type à bol vibrant, de la source de poussières qui est placée bien souvent directement au-dessus desdits postes d'embouteillage.

L'invention permet aussi de réduire, voire de supprimer les contraintes d'implantation de ces matériels sur site, grâce à de nouvelles possibilités offertes par le dispositif convoyeur pour le raccordement de la machine d'apprêt avec le poste d'utilisation des bouchons orientés, c'est-à-dire le poste d'embouteillage.

Les nouvelles possibilités en matière d'implantation permettent aussi d'envisager des améliorations quant à l'accès à ces machines d'apprêt aussi bien pour leur approvisionnement que pour leur entretien ou toute autre intervention.

La présente invention propose aussi, en tant que produit, une machine d'apprêt qui réalise, en plus de sa fonction première, à savoir l'orientation des bouchons, une autre fonction, qui consiste à réaliser tout ou partie de l'acheminement de ces bouchons orientés vers le poste d'embouteillage, par exemple.

Selon l'invention, le dispositif convoyeur se présente sous la forme d'un convoyeur avec les caractéristiques de la revendication 1.

Selon une disposition particulière de l'invention, le convoyeur intermédiaire en forme de caisson comporte un canal de guidage des bouchons orientes et au moins une ligne d'ouïes pour leur propulsion et cet ensemble canal - ligne d'ouïes se présente sous une forme curviligne, du genre arc de cercle, entre l'orifice d'entrée situé du côté de la machine d'apprêt et la sortie située sous et dans le prolongement du canal de la colonne formant le convoyeur vertical.

Selon une autre disposition de l'invention, le canal du caisson a une largeur qui est supérieure à celle du canal de la colonne, lequel canal dudit caisson et son entrée peuvent avoir une largeur qui correspond à plusieurs fois le diamètre des bouchons, au moins deux fois, lequel canal est constitué d'une paroi comportant les ouïes, d'une autre paroi espacées de ladite paroi comportant les ouïes d'une distance qui correspond à l'épaisseur desdits bouchons, d'un guide extrados qui s'étend entre ladite entrée et la sortie dudit caisson, et d'un guide intrados dont les extrémités sont à une distance suffisante de ladite entrée et de ladite sortie pour permettre le recyclage des bouchons orientés qui n'ont pas réussi à s'intégrer dans la file des bouchons qui sont guidés par l'extrados.

Toujours selon l'invention, l'extrémité aval du canal du caisson se présente sous la forme d'un goulot délimité par l'extrémité du guide extrados et par un dispositif de séparation en forme de coin, lequel coin comporte, en guise d'arête, un micro galet dont le rôle est d'écarter les bouchons qui ne sont pas dans la file guidée par l'extrados et de les recycler en leur faisant faire le tour du guide intrados, lequel guide intrados est complété par une paroi pour former une sorte d'îlot central dans le caisson autour duquel circulent les bouchons à recycler.

Selon une variante de réalisation de l'invention, l'entrée du canal de convoyage du caisson peut se présenter sous la forme d'un Vé dont l'ouverture est orientée vers le rebord aval du tapis et aménagée pour réceptionner les bouchons orientés au fur et à mesure de leur éjection dudit tapis, laquelle ouverture a une dimension inférieure à deux fois le diamètre des bouchons orientés.

Toujours selon l'invention, le dispositif convoyeur comporte des moyens associés qui permettent de réaliser l'éjection automatique des bouchons hors de leurs rainures du tapis de la machine d'apprêt.

Selon un premier mode de réalisation, l'éjection automatique des bouchons orientés s'effectue au moyen de buses situées sur le côté amont du tapis, à l'opposé de l'entrée du caisson par rapport audit tapis et en face de ladite entrée dudit caisson, lesquelles buses sont alimentées en flux d'un fluide sous pression, de l'air par exemple, qui est mis sous pression par une turbine appropriée du type haute pression et elles soufflent dans les rainures du tapis, lesquelles rainures sont fermées par une extension de la paroi du caisson qui couvre celle munie des ouïes, laquelle paroi s'étend sur plusieurs desdites rainures et en particulier sur une hauteur qui correspond au moins à la hauteur sur laquelle s'étend le soufflage desdits bouchons.

Selon une variante de réalisation de l'invention, les moyens d'éjection automatique des bouchons sont constitués d'un prolongement du caisson et en particulier d'un prolongement de sa paroi de soufflage munie des ouïes qui s'étend sur le tapis de la machine d'apprêt et recouvre sa partie supérieure, laquelle paroi couvre et ferme les rainures dudit tapis et elle comporte des ouïes qui soufflent sur lesdits bouchons disposés dans lesdites rainures et les poussent dans le canal dudit caisson.

Toujours selon l'invention, la colonne du module de convoyage est constituée de tronçons dont la longueur est choisie pour permettre une adaptation de sa hauteur facilement, selon les contraintes liées à son implantation sur le site de la machine d'apprêt, laquelle longueur est, par exemple, de l'ordre de 60 cm.

Toujours selon l'invention, la colonne du module comporte un canal constitué d'un tablier muni des ouïes qui sont disposées selon une ou plusieurs lignes, de deux guides latéraux et d'un guide parallèle à ladite paroi, lesquels guides sont portés par des cavaliers régulièrement répartis sur la colonne et comportent des moyens qui permettent de régler à volonté la position desdits guides.

Selon une variante de réalisation, le canal de la colonne est directement façonné dans le tablier qui porte les ouïes, lequel canal comporte, d'une part, obtenus par pliage, un fond et des parois latérales, et, d'autre part, un guide parallèle audit fond, lequel guide est porté par des cavaliers qui permettent de régler sa position par rapport audit fond, lesquelles ouïes sont disposées dans lesdites parois latérales dudit canal.

Selon une autre disposition de l'invention, les moyens d'alimentation des chambres du module de convoyage en air sous pression sont constitués d'au moins une turbine dont le débit est adapté à la quantité d'ouïes à alimenter et à la pression à maintenir dans lesdites chambres, laquelle pression est de l'ordre de 1500 Pa.

Toujours selon l'invention, le caisson du module comporte des aménagements pour se greffer sur la machine d'apprêt et pour supporter la colonne, et des aménagements pour accueillir la sortie de la turbine et recevoir l'air pulsé provenant de ladite turbine.

Toujours dans le cas d'une machine d'apprêt du type à tapis et selon la vitesse de progression dudit tapis, la paroi du caisson munie des ouïes et qui couvre ledit tapis peut comporter plusieurs lignes d'ouïes et en particulier :
- au moins une ligne principale d'ouïes pour l'éjection et le convoyage des bouchons, qui s'étend sur toute la longueur de ladite paroi;
- au moins une ligne complémentaire d'ouïes, située au-dessus de laite ou desdites lignes principales d'éjection, et qui s'étend sur toute la largeur dudit tapis;
- au moins une ligne complémentaire d'ouïes, située sous ladite ou lesdites lignes principales d'éjection et qui s'étend également sur toute la largeur dudit tapis pour rassembler lesdits bouchons et les contraindre à se regrouper au niveau du rebord aval dudit tapis.

Selon une autre disposition de l'invention, la paroi du caisson qui s'étend au-dessus du tapis, peut se prolonger latéralement, en amont des rainures du tapis, laquelle extension latérale peut comporter également des ouïes qui permettent au flux d'air d'agir plus efficacement sur les bouchons disposés au niveau de cette extrémité amont desdites rainures.

Selon une autre disposition de l'invention, la turbine servant à alimenter les ouïes en air pulsé est disposée sur le côté de la machine d'apprêt, sous le caisson du convoyeur intermédiaire.

Selon une variante de réalisation, dans le cas d'une machine d'apprêt du type à tapis, la turbine est disposée directement sur le caisson qui couvre le tapis et se situe dans l'encombrement de ladite machine d'apprêt et en particulier dans l'encombrement de son tapis.

Toujours selon l'invention, le caisson peut comporter, à sa partie amont, en face du canal, une portion de convoyeur du même type que la colonne verticale, aménagée pour assurer, dans certaines configurations, la jonction avec la machine d'apprêt.

Selon une variante de réalisation, toujours pour des configurations particulières, le caisson peut être muni d'un orifice à sa partie supérieure, à la verticale de l'entrée de son canal, pour accueillir des objets provenant par simple gravité d'une machine d' apprêt, laquelle machine est reliée et associée audit caisson au moyen d'un canal qui maintient l'orientation desdits objets.

L'invention concerne également une machine d'apprêt selon la revendication 18.

L'invention sera encore détaillée à l'aide de la description suivante et des dessins annexés donnés à titre indicatif et dans lesquels:
- la figure 1 montre une machine d'apprêt du type à tapis vertical sans fin, munie du dispositif convoyeur selon l'invention;
- la figure 2 montre la paroi qui couvre le caisson de la machine d'apprêt représentée figure 1, laquelle paroi se prolonge sur le tapis pour couvrir et fermer les rainures dudit tapis ;
- la figure 3 représente, d'une façon plus détaillée, le caisson et son adaptation latérale sur la machine d'apprêt représentée figure 1;
- la figure 4 représente, d'une façon plus détaillée également, le système d'aiguillage situé à la sortie du caisson représenté figure 3;
- la figure 5 représente une variante de réalisation du dispositif convoyeur toujours pour une machine d'apprêt du type à tapis vertical sans fin;
- la figure 6 représente, de façon isolée, le dispositif convoyeur de la machine d'apprêt de la figure 5, à une échelle plus grande que sur ladite figure 5, vu du côté des ouïes de soufflage;
- la figure 7 représente, à une échelle plus grande, le détail de la partie inférieure droite de la figure 6;
- la figure 8 est une section de la colonne du dispositif convoyeur;
- la figure 9 est une section d'une variante de réalisation de la colonne du dispositif convoyeur;
- la figure 10 montre une machine d'apprêt du type à bol vibrant, associée à un dispositif convoyeur selon l'invention;
- la figure 11 montre, de façon isolée, le dispositif convoyeur de la figure 10, seul, vu du côté des ouïes de propulsion ;
- la figure 12 représente une variante de réalisation de la partie inférieure du module constituant le dispositif convoyeur ;
- la figure 13 représente une autre réalisation de la partie inférieure du module, spécialement adaptée à la réception de bouchons orientés qui arrivent par simple gravité.

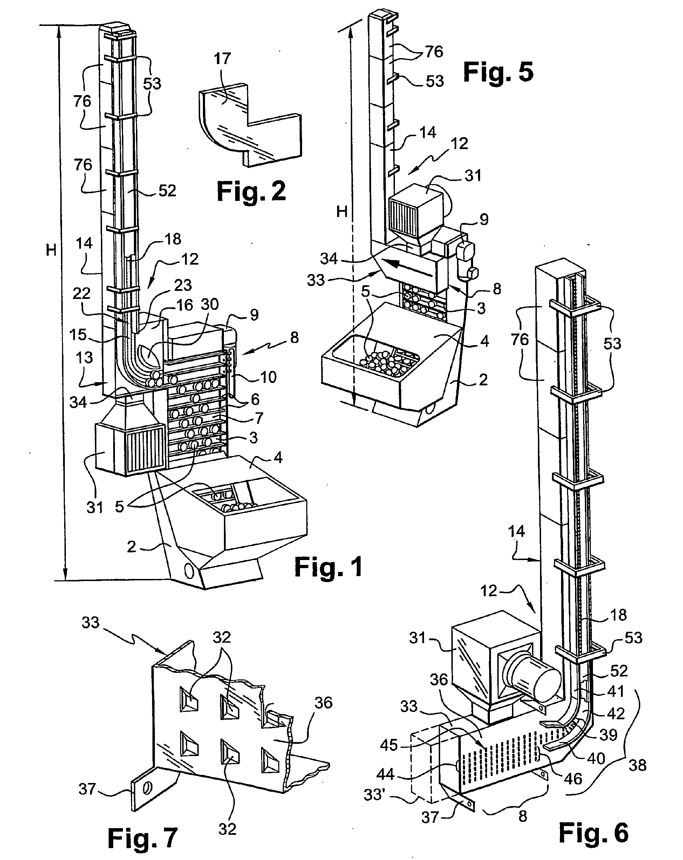

La machine d'apprêt représentée sur les figures 1 et 5 comprend un socle (1) qui porte, d'une part, une structure (2) verticale servant de guide pour un tapis (3) sans fin et, d'autre part, une trémie (4) dans laquelle sont déposés des bouchons (5), en vrac. Ces bouchons (5) sont prélevés automatiquement dans la trémie (4) au moyen du tapis (3) du type à tasseaux (6) et ils se logent dans les rainures (7) dudit tapis (3), entre lesdits tasseaux (6). Le tapis (3) est guidé verticalement dans la structure (2) pour élever les bouchons (5) entre la trémie (4) et la zone repérée (8) où ils sont éjectés, à la partie supérieure de la machine d'apprêt.

Entre la trémie (4) et la zone d'éjection (8), les bouchons (5) sont soumis à une opération de tri qui permet d'éliminer les bouchons mal orientés. Les bouchons (5) bien orientés, apparaissent au-dessus de la trémie (4), entre cette trémie (4) et la zone d'éjection (8) où ils sont éjectés des rainures (7) du tapis (3).

Le tapis (3) est mis en mouvement par un moto réducteur (9) qui est situé à la partie supérieure de la structure (2) de la machine d'apprêt.

Le système d'éjection des bouchons (5) qui sont bien orientés comprend un ensemble de moyens qui permettent d'exercer une pression continue sur lesdits bouchons. Cette pression est exercée par de l'air pulsé qui est canalisé et orienté de façon à faire progresser les bouchons latéralement comme détaillé ci-après.

La machine d'apprêt représentée figure 1 comporte un système d'éjection constitué d'une rampe de buses (10) qui sont disposées sur l'un des côtés du tapis (3), lequel côté correspond à l'extrémité amont des rainures (7). Ces buses (10) sont alimentées en fluide sous pression, de l'air comprimé, par exemple, soit par le biais d'un réseau existant sur le site d'implantation de la machine, soit par une turbine appropriée du type haute pression, non représentée, associée à ladite machine.

Les buses (10) agissent sur les bouchons (5) qui sont logés dans les rainures (7), entre les tasseaux (6), et elles propulsent ces bouchons (5) vers l'extrémité aval du tapis (3) au niveau de laquelle ils sont pris en charge par un module (12) de convoyage.

Ce module (12) comprend un convoyeur intermédiaire en forme de caisson (13) qui fait la jonction entre la structure (2) de la machine d'apprêt et un convoyeur d'acheminement en forme de colonne (14), laquelle colonne a pour fonction de livrer les bouchons (5) à un niveau précis d'où ils progressent, par simple gravité ou autre, par des moyens non représentés, vers le poste d'embouteillage.

Le caisson (13) et la colonne (14) comportent un canal qui permet de guider les bouchons (5) entre le moment où ils sont éjectés de leurs rainures (7) sur le tapis (3) et le moment où ils sont livrés à la partie supérieure de ladite colonne (14).

Sur le caisson (13), le canal (15) est curviligne, en forme d'arc de cercle, pour faire le lien entre les rainures (7) du tapis (3) qui sont horizontales et la colonne (14) qui est verticale.

Ce canal (15) comporte une paroi (16) dont la surface se situe dans le prolongement de celle du tapis (3). Il comprend aussi une paroi (17) qui est parallèle à la paroi (16). Cette paroi (17) est représentée à part, figure 2 ; elle s'étend en fait, de façon monobloc, à la fois sur tout ou partie de la paroi (16) du caisson (13) et sur le tapis (3). Sur ce tapis (3), la paroi (17) ferme les rainures (7) pour réaliser là aussi une sorte de canal, ou tunnel, en face des buses (10). La hauteur de cette paroi (17), sur le tapis (3), est en rapport avec la dimension de la zone de soufflage des buses (10) ; cette hauteur correspond au moins à la dimension de trois rainures (7).

La paroi (17) qui couvre à la fois le caisson (13) et le tapis (3) est de préférence réalisée en matériau translucide pour permettre une surveillance à distance du déroulement de l'opération d'éjection des bouchons et de leur convoyage.

Les parois (16) et (17) sont séparées d'une distance qui correspond à l'épaisseur des bouchons (5) ; elles établissent une continuité pour le guidage des bouchons (5) lorsqu'ils quittent leurs rainures (7), poussés par le flux d'air des buses (10) qui se situent à l'extrémité amont de ladite paroi (17).

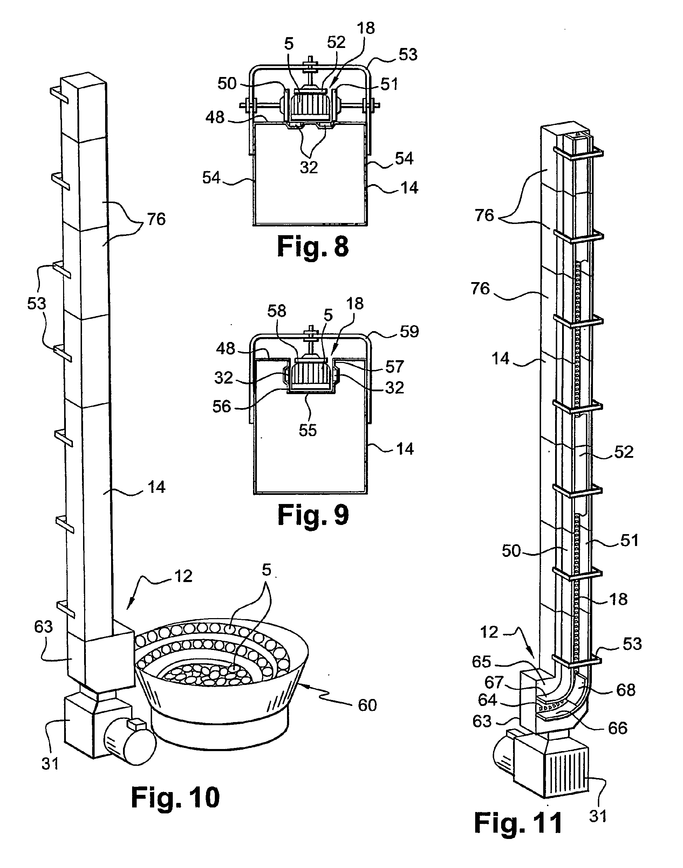

Le canal (18) de la colonne (14) comporte également des parois de guidage qui se situent dans le prolongement de celles du canal (15) du caisson (13), lesquelles seront détaillées plus loin en liaison avec les figures 8 et 9 où ladite colonne (14) est représentée en coupe.

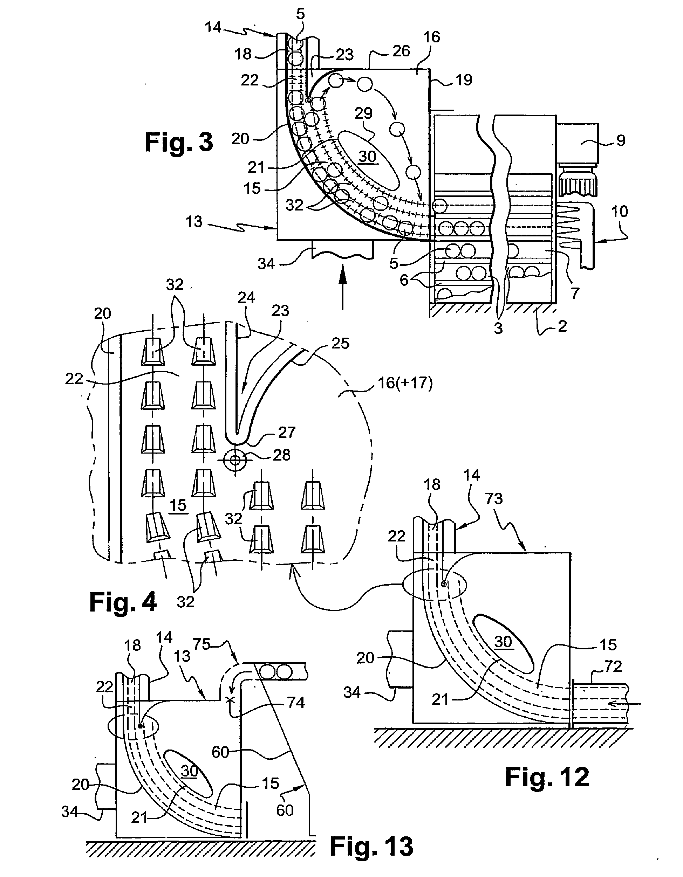

La figure 3 montre, d'une façon plus détaillée, les parties de la machine d'apprêt et du caisson (13) où s'effectuent respectivement l'éjection des bouchons (5) et leur prise en charge.

Le caisson (13) est fixé sur la structure (2) de la machine d'apprêt, à sa partie supérieure, sur le côté aval, dans le prolongement des rainures (7) du tapis (3), ce dernier étant représenté partiellement.

Sur le côté amont du tapis (3), les buses (10) sont en nombre suffisant pour que plusieurs d'entre elles soient toujours en action face aux rainures (7) afin de souffler sur les bouchons (5) et de les propulser vers l'autre côté dudit tapis (3), le côté aval.

Ces buses (10) sont disposées à l'opposé du caisson (13) par rapport au tapis (3) et en face de l'entrée du canal (15) qui est aménagée dans la paroi (19) dudit caisson (13). Cette entrée du canal (15) a une hauteur qui est en relation avec la vitesse d'avancement du tapis et avec la vitesse d'éjection des bouchons (5) hors de leurs rainures (7) ; cette hauteur est, par exemple, de l'ordre de 2 à 3 fois le diamètre desdits bouchons (5). Cette hauteur permet d'améliorer de façon notable les cadences de livraison des bouchons (5).

Pour pouvoir accueillir les bouchons (5) dès qu'ils sont éjectés de leurs rainures (7), le canal (15) du caisson (13) a une largeur qui correspond aussi au moins au double du diamètre desdits bouchons. Ce canal (15) est constitué des parois (16) et (17) dont il a été question auparavant figures 1 et 2, et de deux autres parois latérales qui constituent des guides curvilignes, en forme d'arc de cercle: - un guide extrados (20) qui s'étend entre l'entrée et la sortie du caisson (13), et - un guide intrados (21) dont la longueur est nettement plus réduite de façon à laisser un passage à chacune de ses extrémités pour permettre le recyclage des bouchons (5) qui n'ont pas pu pénétrer dans le goulot (22) qui est aménagé à l'extrémité aval dudit canal (15).

Le goulot (22), situé à la sortie du caisson (13), constitue l'amorce du canal (18) de la colonne (14) qui sera détaillée plus loin. Ce goulot (22) récupère tous les bouchons qui sont guidés par l'extrados (20). Il est délimité par la portion d'extrémité aval de cet extrados (20) et par un autre guide en forme de coin (23) qui est relativement court, de l'ordre de une à deux fois le diamètre des bouchons (5).

Le coin (23) est constitué d'une paroi (24) qui est parallèle à l'extrémité de l'extrados (20) et d'une paroi (25) qui est courbe et se raccorde avec la paroi supérieure (26) du caisson (13) pour renvoyer les bouchons (5) vers l'entrée de ce dernier comme expliqué ci-après.

L'arête (27) du coin (23) forme une sorte d'aiguillage à l'entrée du goulot (22) et comporte un organe séparateur qui est constitué d'un micro galet (28) sur lequel butent les bouchons (5) qui se présentent en deuxième file à l'entrée dudit goulot (22). L'axe de ce micro galet (28) est constitué d'une simple tige métallique emprisonnée entre les deux parois (16) et (17) formant le canal (15) du caisson (13).

Le goulot (22) a une largeur qui est légèrement supérieure au diamètre des bouchons pour placer ces derniers en file indienne avant leur entrée dans le canal (18) du convoyeur d'acheminement en forme de colonne (14).

Les bouchons (5) qui n'atteignent pas l'entrée du goulot (22) sont recyclés, c'est-à-dire qu'il font le tour du guide intrados (21) et se repositionnent ensuite, dès que possible, dans la file qui circule sur le guide extrados (20), laquelle file, compte tenu du remplissage aléatoire des rainures (7), n'est pas toujours une file continue.

Le guide intrados (21) est complété, à l'opposé du canal (15), par une paroi (29) de façon à guider les bouchons recyclés vers l'entrée dudit canal et faciliter leur réintégration dans la file qui circule sur le guide extrados (20). Ce guide intrados (21) et la paroi (29) forment une sorte d'îlot (30) au coeur du caisson (13) entre l'entrée dudit caisson et l'entrée du goulot (22), l'épaisseur de cet îlot (30) correspond sensiblement à celle des bouchons (5).

Le convoyage des bouchons dans le module (12), c'est-à-dire dans le convoyeur intermédiaire constitué par le caisson (13) et le convoyeur d'acheminement constitué par la colonne (14), est effectué par de l'air pulsé qui est fourni par une turbine (31) installée sous ledit caisson (13).

Le caisson (13) et la colonne (14) comportent chacun une chambre ; ces chambres communiquent entre elles et sont maintenues sous pression par la turbine (31) pour alimenter des orifices en forme d'ouïes (32). La pression maintenue dans ces chambres est de l'ordre de 1500Pa.

Les ouïes (32) sont façonnées dans la paroi (16) du caisson (13) et elles sont orientées de façon à faire progresser les bouchons, dès leur sortie des rainures (7) du tapis (3), vers l'aval, c'est-à-dire vers l'extrémité de la colonne (14).

Ces ouïes (32) apparaissent clairement figure 4 et elles sont représentées en perspective figure 7. Elles sont disposées en ligne à partir de l'entrée du caisson (13) et s'étendent de façon continue sur toute la longueur du canal qui sert de guide pour les bouchons.

Dans le canal (18) de la colonne (14), il y a deux lignes d'ouïes (32) qui sont parallèles entre elles alors que dans le canal (15) du caisson (13), le nombre de lignes est plus important. Ce nombre de lignes d'ouïes dans le canal (15) est adapté à la hauteur de l'entrée du caisson (13). Il peut, par exemple, y avoir quatre lignes d'ouïes (32) comme représenté sur la figure pour prendre en charge et propulser les bouchons qui pénètrent dans le caisson (13) vers la colonne (14).

Le module (12) qui est composé de cette colonne (14) et du caisson (13), permet d'avoir ainsi une continuité entre la phase d'éjection des bouchons (5) hors du tapis (3) et leur convoyage vers le poste d'utilisation de ces bouchons. Cette continuité permet d'atteindre des cadences élevées pour alimenter le poste d'utilisation.

Dans le cas de la machine d'apprêt représentée figure 1, cette continuité commence véritablement à l'entrée du caisson (13), là où les bouchons (5) quittent le tapis (3) pour être pris en charge par le flux de fluide, de l'air par exemple, sortant des ouïes (32). La paroi (16) dans laquelle sont façonnées ces ouïes (32) se trouve dans le prolongement du tapis (3) ; la surface de ce tapis (3) qui sert de guide aux bouchons (5) se trouve dans le plan de la surface munie des ouïes (32) du caisson (13).

Le module (12) qui est représenté figure 5, associé à une machine d'apprêt identique à celle de la figure 1, comprend également une colonne (14) qui est portée par un autre type de caisson ; ce caisson (33) s'étend, en plus, sur toute la largeur du tapis (3).

Dans ce mode de réalisation représenté figure 5, l'éjection et la prise en charge des bouchons sont des opérations qui sont effectuées de façon continue au niveau du caisson (33). Les moyens d'éjection des bouchons interviennent sur ces derniers depuis la partie amont du tapis (3) et même un peu au-delà, éventuellement, comme représenté en traits mixtes fins figure 6 grâce à une extension latérale (33') particulière qui peut avoir le même effet que la rampe de buses (10) dont il a été question auparavant. En effet, pour mettre rapidement en mouvement les bouchons qui sont situés à l'extrémité aval des rainures (7), il peut être utile de placer des jets d'air, soit sous forme de buses comme les buses (10) du mode de réalisation de la figure 1, soit simplement sous forme d'ouïes (32) par une extension du caisson sur le tapis (3).

Le flux d'air pulsé nécessaire là aussi pour réaliser l'éjection des bouchons orientés est également produit par une turbine (31) ; la sortie (34) de cette turbine (31) est positionnée sur le caisson (33), et elle se situe de préférence dans l'encombrement du tapis (3) de la machine d'apprêt.

Le flux d'air pulsé est tout d'abord introduit dans la chambre du caisson (33) et circule ensuite dans la chambre de la colonne (14) qui constitue le prolongement de celle dudit caisson (33). La pression de l'air dans ces chambres est également de l'ordre de 1500Pa.

Une partie du caisson (33) masque la partie supérieure du tapis (3) ; le reste dudit caisson déborde latéralement, côté aval, pour supporter la colonne (14). La paroi du caisson (33) qui se situe du côté du tapis (3) est visible figure 6. Cette paroi (36) comporte une partie qui masque le tapis (3), formant une sorte d'écran, de façon à fermer les rainures (7) dudit tapis (3) ; l'autre partie de cette paroi (36) se situe sur le côté dudit tapis (3) ; elle assure la continuité entre ce dernier et la colonne (14) et elle est aussi fermée par des parois qui forment un canal dont le détail sera donné plus loin.

Comme représentée figure 6, la paroi (36) comporte elle aussi, comme la paroi (16) du caisson (13), une multitude d'ouïes (32). Ces ouïes (32) forment de petits jets d'air qui sont orientés vers l'aval, comme représenté de façon plus détaillée figure 7. Dans tous les cas de figures, ces ouïes (32) sont obtenues par un simple découpage et emboutissage des parois dans lesquelles elles sont façonnées, aussi bien dans la paroi des différents caissons que dans celle(s) de la colonne (14).

La figure 6 montre le module (12) d'éjection et de convoyage dans une configuration qui lui permet d'être adaptable sur une machine d'apprêt et en particulier adaptable au niveau de la partie supérieure du tapis (3). Ce module (12) peut être fixé à la structure (2) de la machine, de part et d'autre du tapis (3), au moyen de brides ou autres moyens d'assemblage pratiques comme, par exemple, des pattes (37).

La paroi (36) du caisson (33) comporte deux zones : - la zone d'éjection (8) correspondant à l'éjection des bouchons (5), laquelle zone couvre le tapis (3) et s'étend entre les pattes (37) dudit caisson (33), et - la zone (38) de prise en charge et de convoyage, laquelle zone (38) constitue le convoyeur intermédiaire du module (12) et s'étend entre ledit tapis (3) et l'entrée du convoyeur d'acheminement constitué par la colonne (14) dudit module (12).

La zone (38) comporte un canal (39) qui constitue le prolongement des rainures (7) du tapis (3). Ce canal (39) est délimité par la paroi (36), par des guides (40) et (41) latéraux et par une paroi (42), partiellement représentée, qui est parallèle à ladite paroi (36). Cette paroi (42), qui peut être translucide, se situe dans le plan du tapis (3), formant une continuité avec ce dernier pour assurer la continuité du guidage des bouchons (5) dès leur sortie dudit tapis (3).

On remarque sur la figure 6 que l'entrée du convoyeur intermédiaire de la zone (38) est en forme de Vé. Cette entrée se situe en fait devant la sortie des rainures (7) du tapis (3), pour prendre en charge les bouchons (5) orientés dès leur éjection desdites rainures (7). L'ouverture de ce Vé, du côté du tapis (3), est de l'ordre de 1,5 fois le diamètre des bouchons (5).

Le côté inférieur du Vé est constitué par le guide (40) qui s'étend jusqu'au tapis (3) alors que le côté supérieur est constitué par le guide (41).

La figure 6 montre bien la continuité qui existe entre la zone d'éjection (8) et la zone (38) où s'effectue la prise en charge des bouchons (5). Cette continuité résulte de la présence des lignes d'ouïes (32) avec, de préférence, comme représentées sur les figures, deux lignes principales (44) qui constituent les lignes principales d'éjection. Ces lignes principales (44) s'étendent de la partie amont du caisson (33) jusqu'à l'extrémité aval de la colonne (14).

Selon la vitesse d'avancement du tapis (3), la paroi (36) peut comporter plusieurs lignes d'ouïes complémentaires afin de faciliter l'éjection des bouchons hors de leurs rainures (7) : - une ligne complémentaire (45) située au-dessus des lignes principales (44), et - une ou plusieurs lignes complémentaires (46) situées sous lesdites lignes principales (44) pour concentrer les bouchons vers l'extrémité aval du tapis (3).

Les figures 8 et 9 montrent une coupe de la colonne (14) et en particulier le canal (18) de guidage des bouchons (5). Ce canal (18) est ouvert pour laisser s'échapper l'air pulsé qui sort des ouïes (32). Ces ouïes (32) sont façonnées dans le tablier (48), figure 8, selon une ou plusieurs lignes et, dans ce mode de réalisation de ladite figure 8, le canal (18) est constitué d'une paire de guides (50) et (51) latéraux et d'un guide (52) supérieur. Ces guides (50, 51, et 52) sont portés par des structures en forme de cavaliers (53) et ces cavaliers sont solidaires des parois de la colonne (14) et sont répartis régulièrement sur cette dernière.

La position des différents guides (50, 51 et 52) est réglable pour pouvoir adapter les dimensions du canal à celles des bouchons (5) à véhiculer ce qui permet de disposer d'un modèle de colonne (14) standard en quelque sorte, facilement adaptable à tous types de machine d'apprêt.

La figure 9 montre une variante de réalisation du canal (18). Ce canal (18) est en fait façonné directement, par des opérations de pliage, dans la paroi qui comporte les ouïes (32), c'est-à-dire dans le tablier (48) ; il se présente sous la forme d'une rainure incluse dans la chambre de la colonne (14), laquelle rainure est délimitée par un fond (55) et deux parois (56) et (57) latérales, qui sont disposées en vis-à-vis et comportent les ouïes (32). Un guide supérieur (58) réglable est porté par des cavaliers (59) qui sont solidaires des parois latérales de la colonne (14), comme précédemment, et qui sont régulièrement répartis sur toute la hauteur de ladite colonne (14).

La figure 10 montre une variante d'utilisation du module (12). Ce module (12) est associé à une machine d'apprêt du type constituée d'un bol (60) qui est vibrant. Ce bol (60) contient des bouchons (5) et, comme les machines d'apprêt à tapis, il réalise l'orientation desdits bouchons (5) qui sont ensuite pris en charge par le module (12) tel que décrit précédemment.

Ce module (12), représenté aussi figure 11, comprend un caisson (63) qui est surmonté d'une colonne (14), laquelle colonne est identique aux colonnes représentées auparavant, figures 1 et 5 notamment. Le caisson (63) et la colonne (14) sont alimentés de la même façon en air sous pression au moyen d'une turbine (31).

En sortie du bol (60), les bouchons (5) sont pris en charge et guidés dans le canal (64) du caisson (63) ; ce canal (64) est délimité par la paroi (65) dudit caisson (63), par des guides (66), (67) latéraux et par un guide (68) qui est parallèle à ladite paroi (65), lesquels guides (66, 67 et 68) se situent respectivement dans le prolongement des guides (50, 51 et 52) respectivement, qui forment le canal (18) de la colonne (14) selon le mode de réalisation de la figure 8.

La paroi (65) comporte également deux lignes d'ouïes (32) qui se prolongent dans le tablier (48) de la colonne (14).

La figure 12 montre un caisson (73) qui constitue une variante des caissons décrits précédemment. Ce caisson (73) est alimenté latéralement en air sous pression par une turbine dont la sortie (34) est représentée et il comporte, à sa partie amont, en face du canal (15), une portion (72) de convoyeur du même type que la colonne verticale (14) ; cette portion (72) est aménagée pour assurer dans certaines configurations, la jonction avec la machine d'apprêt.

La figure 13 montre une variante de réalisation du caisson (73) dé la figure 12. Ce caisson est aménagé pour recevoir des bouchons par un orifice (74) qui se situe à sa partie supérieure. La machine d'apprêt est associée à ce caisson (13) par un canal (75) qui fait la jonction entre la sortie des bouchons (5) au niveau de ladite machine et l'entrée dudit caisson (73).

Le caisson représenté figure 12 et figure 13 peut recevoir des bouchons provenant d'une machine d'apprêt du type à bol vibrant ou autre et propulser lesdits bouchons, au moyen d'un flux de fluide, vers la sortie disposée sous la colonne (14).

La machine d'apprêt affublée de son module (12) peut répondre à tous les cas d'implantation sur un site d'embouteillage, par exemple, et ceci grâce notamment à la possibilité d'ajuster la hauteur H de la colonne (14).

Cette possibilité d'ajustement de la hauteur H résulte de la conception de cette colonne (14) qui est divisée en tronçons (76), ces tronçons (76) ayant une hauteur qui peut être standardisée, de l'ordre de 60cm, par exemple.

La machine d'apprêt devient elle aussi, avec son module (12) qui se charge de l'acheminement des bouchons (5), une sorte de composant standard ; le tapis (3) de ladite machine se cantonne dans sa fonction essentielle qui est de réaliser l'orientation des bouchons et leur acheminement au niveau des moyens d'éjection détaillés auparavant.

## Revendications

1. Dispositif convoyeur pour l'acheminement d'objets orientés du genre capsules, couvercles, bouchons ..., associé à une machine d'apprêt du type à tapis, à bol vibrant ou autre, lequel dispositif convoyeur se présente sous la forme d'un module (12) qui est constitué :
- d'un convoyeur vertical en forme de colonne (14) dont la hauteur est ajustable au moyen de tronçons (76) ayant une hauteur choisie pour permettre une adaptation facile de sa hauteur H selon les contraintes d'implantation sur le site de ladite machine d'apprêt et,
- d'un convoyeur intermédiaire en forme de caisson (13, 33, 63, 73) qui comporte une zone (38) de prise en charge desdits objets orientés pour les mettre en file indienne avant leur entrée dans ladite colonne (14),
lequel caisson (13, 33, 63, 73) est interposé entre ladite colonne (14) et ladite machine d'apprêt et il supporte ladite colonne (14),
lequel module (12), c'est-à-dire le caisson (13. 33, 63, 73) et la colonne (14), comprend un canal (15, 18, 39, 64) pour guider lesdits objets orientés et des moyens de propulsion de ces derniers, en forme de jets de fluide pulsé,
lesquels jets sont générés par des buses en forme d'ouïes (32) disposées sur l'une au moins des parois dudit canal,
lesquelles ouïes (32) communiquent avec la chambre dudit caisson (13, 33, 63, 73) et la chambre de ladite colonne (14),
lesquelles chambres sont alimentées en fluide sous pression par des moyens du genre turbine (31),
et l'ensemble constitué par ledit canal et lesdites ouïes forme une continuité entre ladite machine d'apprêt et l'extrémité supérieure de ladite colonne (14) pour atteindre des cadences élevées d'alimentation pour le poste d'utilisation desdites objets orientés.

2. Dispositif convoyeur selon la revendication 1, **caractérisé en ce que** la zone (38) de prise en charge des objets orientés comporter, au niveau du caisson (13, 33, 63, 73), un canal (15, 39, 64) et au moins une ligne d'ouïes (32) et cet ensemble canal - ligne d'ouïes se présente sous une forme curviligne, du genre arc de cercle, entre l'entrée dudit caisson située du côté de la machine d'apprêt et la sortie dudit caisson qui est située sous et dans le prolongement du canal (18) de la colonne (14).

3. Dispositif convoyeur selon la revendication 2, **caractérisé en ce que** le canal (15) du caisson (13) a une largeur qui est supérieure à celle du canal (18) de la colonne (14), laquelle largeur correspond à plusieurs fois le diamètre des objets, au moins deux fois, et ledit canal (15) est constitué - d'une paroi (16) comportant les ouïes (32), - d'une paroi (17) espacée de ladite paroi (16) d'une distance qui correspond à l'épaisseur desdits objets, - d'un guide extrados (20) qui s'étend entre l'entrée et la sortie dudit caisson (13) et - d'un guide intrados (21), dont les extrémités sont à une distance suffisante de ladite entrée et de ladite sortie pour permettre le recyclage dans ledit caisson (13) desdits objets qui n'ont pas réussi à s'intégrer dans la ligne des objets qui circulent sur ledit guide extrados (20) pour accéder à l'entrée dudit canal (18).

4. Dispositif convoyeur selon la revendication 3, **caractérisé en ce qu'**il comporte, à l'extrémité aval du canal (15) du caisson (13), un goulot (22) délimité par l'extrémité du guide extrados (20) et par un dispositif de séparation en forme de coin (23), lequel coin (23) comporte, en guise d'arête, un micro galet (28) dont le rôle est d'écarter les objets qui ne sont pas dans la file qui circule sur ledit guide extrados (20) et de les recycler en leur faisant faire le tour du guide intrados (21), lequel guide intrados est complété par une paroi (29) pour former une sorte d'îlot (30) au centre dudit caisson (13) autour duquel circulent lesdits objets à recycler.

5. Dispositif convoyeur selon la revendication 2, **caractérisé en ce que** l'entrée du canal (39, 64) du caisson (33, 63), au niveau de la zone de prise en charge (38), se présente sous la forme d'un Vé dont l'ouverture est orientée vers le rebord du tapis (3) de la machine d'apprêt, lequel Vé est aménagé pour réceptionner les objets au fur et à mesure de leur éjection par rapport audit tapis (3), laquelle ouverture a une dimension inférieure à deux fois le diamètre desdits objets.

6. Dispositif convoyeur selon la revendication 1, **caractérisé en ce qu'**il comporte des moyens, un fluide sous pression, due l'air comprimé, qui permettent de réaliser l'éjection automatique des objets hors de leurs rainures (7) du tapis (3) de la machine d'apprêt.

7. Dispositif convoyeur selon la revendication 6, **caractérisé en ce qu'**il comporte des moyens d'éjection automatique des objets, lesquels moyens sont constitués d'une rampe de buses (10) situées sur le côté amont du tapis (3) de la machine d'apprêt, à l'opposé de l'entrée du caisson (13) par rapport à ce dernier et en face de l'entrée dudit caisson (13), lesquelles buses (10) sont alimentées en flux de fluide sous pression par une turbine appropriée du type haute pression et elles soufflent dans les rainures (7) dudit tapis (3), lesquelles rainures (7) sont fermées par la paroi (17) dudit caisson (13) qui couvre la paroi (16) munie des ouïes (32), laquelle paroi (17) s'étend sur plusieurs desdites rainures (7) et en particulier sur une hauteur qui correspond au moins à la hauteur sur laquelle s'étend le soufflage desdits objets.

8. Dispositif convoyeur selon la revendication 6, **caractérisé en ce qu'**il comporte des moyens d'éjection automatique des objets, lesquels moyens sont constitués d'un prolongement du caisson (33) sur le tapis (3) de la machine d'apprêt, à sa partie supérieure, et en particulier de sa paroi (36) pour couvrir une partie dudit tapis (3), laquelle paroi (36) couvre les rainures (7) dudit tapis (3) et comporte des ouïes (32) qui permettent de souffler sur les objets disposés dans lesdites rainures (7) et de les pousser dans le canal (39) dudit caisson (33).

9. Dispositif convoyeur selon la revendication 1, **caractérisé en ce qu'**il comprend une colonne (14) constituée de tronçons (76) dont la longueur est de l'ordre de 60 cm.

10. Dispositif convoyeur selon la revendication 9, **caractérisé en ce que** la colonne (14) du module (12) comporte un canal (18) constitué d'un tablier (48) muni des ouïes (32) qui sont disposées selon une ou plusieurs lignes, de deux guides (50), (51) latéraux et d'un guide (52) parallèle audit tablier (48), lesquels guides (50, 51, 52) sont portés par des cavaliers (53) régulièrement répartis sur ladite colonne (14) et comportent des moyens qui permettent de régler à volonté la position desdits guides.

11. Dispositif convoyeur selon la revendication 9, **caractérisé en ce que** la colonne (14) du module (12) comporte un canal (18) qui est directement façonné dans le tablier (48) qui porte les ouïes (32), lequel canal (18) comporte, d'une part, obtenus par pliage, un fond (55) et des parois (56), (57) latérales, et, d'autre part, un guide (58) parallèle audit fond (55) porté par des cavaliers (59) qui permettent de régler sa position par rapport audit fond (55), lesquelles ouïes (32) sont disposées dans lesdites parois (56), (57) latérales dudit canal (18).

12. Dispositif convoyeur selon la revendication 1, **caractérisé en ce qu'**il comporte des moyens d'alimentation de la chambre du caisson (13, 33, 63, 73) et de la colonne (14) du module (12) en fluide sous pression, lesquels moyens d'alimentation sont constitués d'au moins une turbine (31) dont le débit est adapté à la quantité d'ouïes (32) à alimenter et à la pression à maintenir dans lesdites chambres, laquelle pression est de l'ordre de 1500 Pa.

13. Dispositif convoyeur selon la revendication 8, **caractérisé en ce que**, selon la vitesse de progression du tapis (3) de la machine d'apprêt, la paroi (36) du caisson (33) qui est munie des ouïes (32) comporte plusieurs lignes d'ouïes (32) et en particulier ;
- au moins une ligne (44) principale d'ouïes (32) pour l'éjection et le convoyage des objets, qui s'étend sur toute la longueur de ladite paroi (36) ;
- au moins une ligne (45) complémentaire d'ouïes (32), située au-dessus de ladite ou desdites lignes (44) principales d'éjection, et qui s'étend sur toute la largeur dudit tapis (3) ;
- au moins une ligne (46) complémentaire d'ouïes (32), située sous ladite ou lesdites lignes (44) principales d'éjection et qui s'étend également sur toute la largeur dudit tapis (3) pour rassembler lesdits objets et les contraindre à se regrouper au niveau de la bordure aval dudit tapis (3).

14. Dispositif convoyeur selon la revendication 1, **caractérisé en ce qu'**il comporte une turbine (31) servant à alimenter les ouïes (32) en fluide pulsé, laquelle turbine est disposée sur le côté de la machine d'apprêt, sous le caisson (13, 33) du convoyeur intermédiaire.

15. Dispositif convoyeur selon la revendication 1, **caractérisé en ce qu'**il comporte une turbine (31) servant à alimenter les ouïes (32) en fluide pulsé, laquelle turbine est disposée directement sur le caisson (33), dans l'encombrement de ladite machine d'apprêt et en particulier dans l'encombrement de son tapis (3).

16. Dispositif convoyeur selon la revendication 1, **caractérisé en ce qu'**il comporte un caisson (73) muni, à sa partie amont, d'une portion (72) de convoyeur du même type que la colonne verticale (14), aménagée pour assurer la jonction avec la machine d'apprêt.

17. Dispositif convoyeur selon la revendication 1, **caractérisé en ce qu'**il comporte un caisson (73) muni d'un orifice (74) à sa partie supérieure, à la verticale de l'entrée de son canal (15), pour accueillir des objets provenant par simple gravité d'une machine d'apprêt, laquelle machine est reliée et associée audit dispositif convoyeur par un canal (75) qui maintient l'orientation desdits objets.

18. Machine d'apprêt pour des objets du genre capsules, couvercles, bouchons..., **caractérisée en ce qu'**elle comporte un dispositif convoyeur selon la revendication 1, chargé de l'acheminement desdits objets vers l'extrémité supérieure de la colonne (14) dudit dispositif convoyeur, et cet ensemble constitué de la machine d'apprêt, de type standard, et dudit dispositif de convoyage forme un véritable produit intégrable dans une chaîne d'embouteillage.

19. Machine d'apprêt pour des objets du genre capsules, couvercles, bouchons..., selon la revendication 18, du type à tapis, **caractérisée en ce qu'**elle comporte :
- un tapis (3) qui se cantonne dans sa fonction essentielle consistant à réaliser l'orientation des objects et leur acheminement au niveau des moyens d'éjection desdits objets,
- un dispositif convoyeur, chargé de l'acheminement desdits objets vers l'extrémité supérieure de la colonne (14) dudit dispositif convoyeur,
et cet ensemble constitué de la machine d'apprêt à tapis (3), de type standard, et dudit dispositif de convoyage forme un véritable produit intégrable dans une chaîne d'embouteillage.

## Claims

1. A conveyor device for routing orientated objects of the closure, lids, caps ... type, associated with a preparation machine of the type having a belt (3), a vibrating bowl (60) or the like, which conveyor device is in the form of a module (12) which consists:
- of a vertical conveyor in the form of a column (14), the height of which is adjustable with sections (76) having a length which is chosen to allow readily an adaptation of its height H to suit installation constraints on the site of the preparation machine and,
- of an intermediate conveyor in the form of a box section (13, 33, 63, 73) which comprises a take-up zone (38) of said orientated caps so as to place these caps in single file before they enter in column (14),
said box sections (13, 33, 63, 73) is interposed between said column (14) and said preparation machine and supports said column (14),
which module (12), i.e. the box section (13, 33, 63, 73) and the column (14), comprises means in the form of a duct (15, 18, 39, 64) for guiding said objects and means for propelling the latter in the form of jets of blown fluid,
which jets are generated by nozzles in the form of louvers (32) arranged on at least one of the walls of said duct,
which louvers (32) communicate with the chamber of said box section (13, 33, 63, 73), and of said column (14),
which chambers are supplied with pressurized fluid by means of the blower kind (31),
and the assembly consisting of said duct and said louvers forms a continuation running between said preparation machine and the upper end of said column (14) so as to achieve high supplying speed rates for the station .that uses the oriented caps.

2. The conveyor device as claimed in claim 1, **characterized in that** the take-up section (38) of orientated caps comprises, at the box section (13, 33, 63, 73) comprises a duct (15, 39, 64) and at least one row of louvers (32) and this duct/row of louvers assembly is in the shape of a curve, like an arc of a circle, between the preparation machine side inlet of said box section and its outlet which lies under and in the continuation of the duct (18) of the column (14).

3. The conveyor device as claimed in claim 2, **characterized in that** it comprises a box section (13) in which the width of the duct (15) exceeds that of the duct (18) of the column (14), which duct (15) and its inlet have a width which corresponds to several times the diameter of the objects, at least twice their diameter, which duct (15) consists - of a wall (16) comprising the louvers (32), - of a wall (17) spaced away from said wall (16) by a distance which corresponds to the thickness of said objects, - of an extrados guide (20) which runs between the inlet and the outlet of said box section (13) and - an intrados guide (21), the ends of which are sufficiently distanced from said inlet and from said outlet that it is possible for said objects which have not managed to enter the row of objects circulating on said extrados guide (20) in order to reach the inlet of said duct (18) to be recycled to said box section (13).

4. The conveyor device as claimed in claim 3, **characterized in that** it comprises, at the downstream end of the duct (15) of the box section (13), a neck (22) delimited by the end of the extrados guide (20) and by a wedge-shaped separation device (23), which wedge (23) comprises, as a ridge, a microroller (28), the purpose of which is to move aside those objects which are not in the succession circulating along said extrados guide (20) and to recycle them by causing them to pass around the intrados guide (21), which intrados guide is supplemented by a wall (29) so as to form a kind of island (30) in the middle of said box section (13) around which said objects for recycling circulate.

5. The conveyor device as claimed in claim 2, **characterized in that** the inlet of the duct (39, 64) of the box section (33, 63), at take-up zone (38), is in the shape of a Vee, the opening of which is directed toward the edge of the belt (3) of the preparation machine, which Vee is designed to receive the objects as they are ejected from said belt (3), which opening has a dimension shorter than twice the diameter of said objects.

6. The conveyor device as claimed in any one of claims 1 to 5, **characterized in that** it comprises associated means, a pressurized fluid, compressed air, which allow the objects to be ejected automatically from their grooves (7) in the belt (3) of the preparation machine.

7. The conveyor device as claimed in claim 6, **characterized in that** it comprises means for automatically ejecting the objects, which means consist of a linear array of nozzles (10) situated on the upstream side of the belt (3) of the preparation machine, on the opposite side to the inlet to the box section (13) with respect to this belt and facing the inlet to said box section (13), which nozzles (10) are supplied with a stream of pressurized fluid by an appropriate blower of the high-pressure type and blow into the grooves (7) of said belt (3), which grooves (7) are closed off by the wall (17) of said box section (13) which covers the wall (16) that is equipped with the louvers (32), which wall (17) extends over several of said grooves (7) and in particular over a height which corresponds at least to the height over which said objects are blown.

8. The conveyor device as claimed in claim 6, **characterized in that** it comprises means for automatically ejecting the objects, which means consist of a continuation of the box section (33) on the belt (3) of the preparation machine, at its upper part, and in particular of its wall (36) to cover part of said belt (3), which wall (36) covers the grooves (7) of said belt (3) and comprises louvers (32) able to blow on the objects positioned in said grooves (7) and drive them into the duct (39) of said box section (33).

9. The conveyor device as claimed in any one of claims 1 to 8, **characterized in that** it comprises a column (14) consisting of sections (76), the length of which is chosen to allow its height to be readily adapted to suit installation constraints on the site of the preparation machine, said length being, for example, of the order of 60 cm.

10. The conveyor device as claimed in any one of claims 1 to 9, **characterized in that** the column (14) of the module (12) comprises a duct (18) consisting of an apron (48) equipped with the louvers (32) which are arranged in one or more rows, of two lateral guides (50), (51) and of a guide (52) parallel to said apron (48), which guides (50, 51, 52) are borne by brackets (53) uniformly distributed over said column (14) and comprise means that allow the position of said guides to be adjusted at will.

11. The conveyor device as claimed in any one of claims 1 to 9, **characterized in that** the column (14) of the module (12) comprises a duct (18) which is fashioned directly in the apron (48) which bears the louvers (32), which duct (18) comprises, on the one hand, obtained by bending, a bottom (55) and side walls (56), (57) and, on the other hand, a guide (58) parallel to said bottom (55) borne by brackets (59) which allow its position to be adjusted relative to said bottom (55), which louvers (32) are arranged in said side walls (56), (57) of said duct (18).

12. The conveyor device as claimed in any one of claims 1 to 11, **characterized in that** it comprises means for supplying the chamber of the box section (13, 33, 63, 73) and of the column (14) of the module (12) with pressurized fluid, which supply means consist of at least one blower (31), the throughput of which is tailored to the number of louvers (32) to be supplied and to the pressure to be maintained in said chambers, which pressure is of the order of 1500 Pa.

13. The conveyor device as claimed in claim 8, **characterized in that**, according to the speed of travel of the belt (3) of the preparation machine, that wall (36) of the box section (33) which is equipped with the louvers (32) comprises several rows of louvers (32) and, in particular:
- at least one main row (44) of louvers (32) for ejecting and conveying the objects, which extends over the entire length of said wall (16);
- at least one additional row (45) of louvers (32) situated above said main ejection row or rows and which extends over the entire width of said belt (3);
- at least one additional row (46) of louvers (32) which is situated under said main ejection row or rows and extends also over the entire width of said belt (3) to gather said objects back together and force them to regroup at the downstream margins of said belt (3).

14. The conveyor device as claimed in any one of claims 1 to 13, **characterized in that** it comprises a blower (31) used to supply the louvers (32) with blown fluid, this blower being positioned on the preparation machine side, under the box section (13, 33) of the intermediate conveyor.

15. The conveyor device as claimed in any one of claims 1 to 14, **characterized in that** it comprises a blower (31) used to supply the louvers (32) with blown fluid, this blower being arranged directly on the box section (33) within the footprint of said preparation machine and, in particular, within the footprint of its belt (3).

16. The conveyor device as claimed in any one of claims 1 to 4, **characterized in that** it comprises a box section (73) equipped, at its upstream part, with a conveyor portion (72) of the same kind as the vertical column (14), designed to provide the junction with the preparation machine.

17. The conveyor device as claimed in any one of claims 1 to 4, **characterized in that** it comprises a box section (73) equipped with an orifice (74) at its upper part, vertically aligned with the inlet of its duct (15), to accept objects dropping simply under gravity from a machine for preparing said objects, which machine is connected to and associated with said conveyor device by a duct (75) which maintains the orientation of said objects.

18. A preparation machine for objects of the lid, cap, type, **characterized in that** it comprises a conveying device as claimed in claim 1, which routes objects toward the upper end of the column (14) of said conveying device, and this assembly consisting of the preparation machine, of the standard type, and of said conveying device forms an actual product that can be incorporated into a bottle line.

19. A preparation machine for objects of the lid, cap, type,... as claimed in claim 18, of the type having a belt, **characterized in that** it comprises:
- a belt (3) confined to its essential function which is that of orienting objects and routing them to the ejection means,
- a conveying device which routes objects toward the upper end of the column (14) of said conveying device, and this assembly consisting of said preparation machine having a belt (3), standard type, and of said conveying device forms an actual product that can be incorporated into, for example, a bottling line or the like.

## Patentansprüche

1. Fördervorrichtung zur Beförderung von ausgerichteten Objekten der Art Kapseln, Deckel, Korken ..., im Zusammenhang mit einer Deckelbeschickermaschine mit Förderer, Schwingförderer oder andere, die Fördervorrichtung sich präsentierend in Form eines Moduls (12), bestehend aus:
- einem Senkrechtförderer in Form einer Säule (14), dessen Höhe mit Teilstückmitteln (76) anpassbar ist, aufweisend eine gewählte Höhe zum Ermöglichen einer einfachen Anpassung seiner Höhe H gemäß der Einbaubedingungen am Standort der Deckelbeschickermaschine und
- einem Zwischenförderer in Form eines Kastens (13, 33, 63, 73), der eine Zone (38) zur Übernahme der ausgerichteten Objekte beinhaltet, um diese in einem Gänsemarsch anzuordnen, vor ihrem Eintritt in die Säule (14),
der Kasten (13, 33, 63, 73) angeordnet zwischen der Säule (14) und der Deckelbeschickermaschine und stützend die Säule (14),
das Modul (12), dass heißt der Kasten (13, 33, 63, 73) und die Säule (14), umfassend einen Kanal (15, 18, 39, 64) zum Führen der ausgerichteten Objekte und Mittel zum Vortrieb letzterer in Form von gepulsten Fluidstrahlen,
die Strahlen generiert über Düsen in Form von Lufteinlassöffnungen (32), angeordnet an mindestens einer Wand des Kanals,
die Lufteinlassöffnungen (32) kommunizierend mit dem Raum des Kastens (13, 33, 63, 73) und dem Raum des Kanals (14),
die Räume gespeist mit druckbeaufschlagtem Fluid mittels einer Art Turbine (31),
und die Funktionseinheit bestehend aus dem Kanal und den Lufteinlassöffnungen bilden eine Kontinuität zwischen der Deckelbeschickermaschine und dem oberen Ende der Säule (14) zum Erreichen eines hohen Taktes bei der Zuführung zur Verwendungsstelle für die ausgerichteten Objekte.

2. Fördervorrichtung gemäß Anspruch 1, **dadurch gekennzeichnet, dass** die Zone (38) zur Übernahme der ausgerichteten Objekte auf Höhe des Kastens (13, 33, 63, 73) einen Kanal (15, 39, 64) umfasst und mindestens eine Reihe Lufteinlassöffnungen (32) und diese Funktionseinheit Kanal-Lufteinlassöffnungsreihe sich in einer gekrümmten Form präsentiert, in bogenförmiger Art, zwischen dem Eingang des Kastens, angeordnet an der Seite der Deckelbeschickermaschine, und dem Ausgang des Kastens, der unter und in Verlängerung des Kanals (18) der Säule (14) angeordnet ist.

3. Fördervorrichtung gemäß Anspruch 2, **dadurch gekennzeichnet, dass** der Kanal (15) des Kastens (13) eine Breite hat, die höher ist als die des Kanals (18) der Säule (14), die Breite dem Vielfachen des Durchmessers der Objekte entsprechend, mindestens dem Zweifachen, und der Kanal (15) bestehend - aus einer Wand (16), umfassend die Lufteinlassöffnungen (32), - aus einer Wand (17), beabstanded von der Wand (16) mit einer Distanz, die der Dicke der Objekte entspricht, - aus einer Extrados-Führung (20), die sich zwischen dem Eingang und dem Ausgang des Kastens (13) erstreckt und - aus einer Intrados-Führung (21), deren Enden in einer ausreichenden Distanz zum Eingang und zum Ausgang sind, um die Rückführung der Objekte in den Kasten (13) zu ermöglichen, die sich nicht erfolgreich in die Reihe der Objekte integriert haben, die sich auf der Extrados-Führung (20) bewegen, um zum Eingang des Kanals (18) zu gelangen.

4. Fördervorrichtung gemäß Anspruch 3, **dadurch gekennzeichnet, dass** sie am stromabwärtigen Ende des Kanals (15) des Kastens (13) einen Engpass (22) umfasst, begrenzt durch das Ende der Extrados-Führung (20) und durch eine Trennvorrichtung in Form eines Winkels (23), der Winkel (23) umfassend, anstelle einer Kante, eine Mikroleitrolle (28), deren Rolle das Wegschieben der Objekte ist, die nicht in der Schlange sind, die sich auf der Extrados-Führung (20) bewegt und sie rückzuführen, indem sie sie die Runde über die Intrados-Führung (21) machen lässt, die Intrados-Führung vervollständigt durch eine Wand (29), um eine Art Insel (30) zu bilden, im Zentrum des Kastens (13), um die sich die rückgeführten Objekte bewegen.

5. Fördervorrichtung gemäß Anspruch 2, **dadurch gekennzeichnet, dass** der Eingang des Kanals (39, 64) des Kastens (33, 63) sich auf der Höhe der Zone zur Übernahme (38) in V-Form präsentiert, deren Öffnung in Richtung der überstehenden Kante des Förderers (3) der Deckelbeschickermaschine ausgerichtet ist, das V zur Aufnahme der Objekte ausgestattet, eins nach dem anderen, nach ihrem Auswurf in Bezug zum Förderer (3), die Öffnung eine Dimension aufweisend, kleiner als das Zweifache des Durchmessers der Objekte.

6. Fördervorrichtung gemäß Anspruch 1, **dadurch gekennzeichnet, dass** sie Mittel umfassen, ein druckbeaufschlagtes Fluid, komprimierte Luft, die die Durchführung des automatischen Auswurfs der Objekte ermöglichen, aus ihren Rinnen (7) des Förderers (3) der Deckelbeschickermaschine.

7. Fördervorrichtung gemäß Anspruch 6, **dadurch gekennzeichnet, dass** sie automatische Auswurfsmittel für Objekte umfasst, die Mittel zusammengesetzt aus einer Düsenrampe (10), angeordnet an der stromaufwärtigen Seite des Förderers (3) der Deckelbeschickermaschine, gegenüberliegend zum Eingang des Kastens (13) in Bezug zum letzteren und frontal zum Eingang des Kastens (13), die Düsen (10) versorgt mit einem Fluidstrom, unter Druck durch eine geeignete Hochdruckturbine, und blasend in die Rinnen (7) des Förderers (3), die Rinnen (7) geschlossen durch die Wand (17) des Kastens (13), der die Wand (16) bedeckt, versehen mit Lufteinlassöffnungen (32), die Wand (17) sich über eine Vielzahl dieser Rinnen (7) erstreckend und insbesondere über eine Höhe, die mindestens der Höhe entspricht, auf die sich das Blasen der Objekte erstreckt.

8. Fördervorrichtung gemäß Anspruch 6, **dadurch gekennzeichnet, dass** sie automatische Auswurfsmittel für Objekte umfasst, die Mittel bestehend aus einer Verlängerung des Kastens (33) auf dem Förderer (3) der Deckelbeschickermaschine, zu ihrem oberen Abschnitt und insbesondere von ihrer Wand (36), um einen Abschnitt des Förderers (3) zu bedecken, die Wand (36) bedeckend die Rinnen (7) des Förderers (3) und umfassend Lufteinlassöffnungen (32), die es ermöglichen, die in den Rinnen (7) angeordneten Objekte anzublasen und sie in den Kanal (39) des Kastens (33) zu stoßen.

9. Fördervorrichtung gemäß Anspruch 1, **dadurch gekennzeichnet, dass** sie eine Säule (14) umfasst, bestehend aus Teilstücken (76), deren Länge in der Größenordnung von 60 cm ist.

10. Fördervorrichtung gemäß Anspruch 9, **dadurch gekennzeichnet, dass** die Säule (14) des Moduls (12) einen Kanal (18) umfasst, bestehend aus einer Schutzvorrichtung (48), versehen mit Lufteinlassöffnungen (32), die entsprechend in einer oder mehreren Reihen angeordnet sind, aus zwei seitlichen Führungen (50), (51) und einer Führung (52), parallel zur Schutzvorrichtung (48), die Führungen (50, 51, 52) getragen von Krampen (53), gleichmäßig über die Säule (14) verteilt und umfassend Mittel, die es ermöglichen, die Position der Führungen beliebig einzustellen.

11. Fördervorrichtung gemäß Anspruch 9, **dadurch gekennzeichnet, dass** die Säule (14) des Moduls (12) einen Kanal (18) umfasst, der direkt in die Schutzvorrichtung (48) eingearbeitet ist, die die Lufteinlassöffnungen (32) trägt, der Kanal (18) umfassend, in einem Teil, durch Biegen erhalten, einen Boden (55) und seitliche Wände (56), (57) und, in einem anderen Teil, eine Führung (58), parallel zum Boden (55), getragen über Krampen (59), die es ermöglichen, ihre Position in Bezug zum Boden (55) einzustellen, die Lufteinlassöffnungen (32) angeordnet in den seitlichen Wänden (56), (57) des Kanals (18).

12. Fördervorrichtung gemäß Anspruch 1, **dadurch gekennzeichnet, dass** sie Zuführungsmittel des Raumes des Kastens (13, 33, 63, 73) und der Säule (14) des Moduls (12) aus druckbeaufschlagtem Fluid umfasst, die Zuführungsmittel bestehend aus mindestens einer Turbine (31), deren Ausstoß an die Anzahl der Lufteinlassöffnungen (32) angepasst ist, zum Zuführen und Erhalten des Drucks in den Räumen, der Druck in der Größenordnung von 1500 Pa.

13. Fördervorrichtung gemäß Anspruch 8, **dadurch gekennzeichnet, dass**, gemäß der Geschwindigkeit des Förderers (3) der Deckelbeschickermaschine, die Wand (36) des Kastens (33), die mit Lufteinlassöffnungen (32) versehen ist, eine Vielzahl von Reihen von Lufteinlassöffnungen (32) umfasst und insbesondere;
- mindestens eine Hauptreihe (44) von Lufteinlassöffnungen (32) zum Auswurf und Überführung der Objekte, die sich entlang der gesamten Länge der Wand (36) erstreckt;
- mindestens eine Ergänzungsreihe (45) von Lufteinlassöffnungen (32), angeordnet oberhalb der oder den Hauptreihen (44) zum Auswurf und die sich entlang der gesamten Breite des Förderers (3) erstreckt;
- mindestens eine Ergänzungsreihe (46) von Lufteinlassöffnungen (32), angeordnet unter der oder den Hauptreihen (44) zum Auswurf und die sich in gleicher Weise über die gesamte Breite des Förderers (3) erstreckt, zum Sammeln der Objekte und um sie zu zwingen, sich auf der Höhe des Randes stromabwärts im Förderer (3) neu zu gruppieren.

14. Fördervorrichtung gemäß Anspruch 1, **dadurch gekennzeichnet, dass** sie eine Turbine (31) umfasst, dienend zur Versorgung der Lufteinlassöffnungen (32) mit gepulstem Fluid, die Turbine angeordnet auf der Seite der Deckelbeschickermaschine, unter dem Kasten (13, 33) des Zwischenförderers.

15. Fördervorrichtung gemäß Anspruch 1, **dadurch gekennzeichnet, dass** sie eine Turbine (31) umfasst, dienend zur Versorgung der Lufteinlassöffnungen (32) mit gepulstem Fluid, die Turbine direkt auf dem Kasten (33) angeordnet, in dem Bauraum der Deckelbeschickermaschine und insbesondere in dem Bauraum ihres Förderers (3).

16. Fördervorrichtung gemäß Anspruch 1, **dadurch gekennzeichnet, dass** sie einen Kasten (73) umfasst, versehen, an ihrem stromaufwärtigen Teil, mit einem Fördererabschnitt (72) des gleichen Typs wie die vertikale Säule (14), gestaltet, um eine Verbindung mit der Deckelbeschickermaschine sicherzustellen.

17. Fördervorrichtung gemäß Anspruch 1, **dadurch gekennzeichnet, dass** sie einen Kasten (73) umfasst, an seinem oberen Abschnitt mit einer Öffnung (74) versehen, in der Vertikalen des Eingang seines Kanals (15), zum Empfangen von Objekten, durch einfache Gravitation von einer Deckelbeschickermaschine kommend, die Maschine verbunden und assoziiert mit der Fördervorrichtung über einen Kanal (75), der die Ausrichtung der Objekte beibehält.

18. Deckelbeschickermaschine für Objekte der Art Kapseln, Deckel, Korken ..., **dadurch gekennzeichnet, dass** sie eine Fördervorrichtung gemäß Anspruch 1 umfasst, zuständig für die Beförderung der Objekte in Richtung des oberen Endes der Säule (14) der Fördervorrichtung und die Funktionseinheit aus der Deckelbeschickermaschine des Standardtyps besteht und die Fördervorrichtung ein wirklich integrierbares Produkt in einer Fließbandabfüllanlage bildet.

19. Deckelbeschickermaschine für Objekte der Art Kapseln, Deckel, Korken ... gemäß Anspruch 18, des Typs Förderer, **dadurch gekennzeichnet, dass** sie umfasst:
- einen Förderer (3), der sich auf seine wesentliche Funktion beschränkt, bestehend aus dem Realisieren der Ausrichtung der Objekte und deren Beförderung in die Höhe der Auswurfmittel der Objekte,
- eine Fördervorrichtung, zuständig für die Beförderung der Objekte in Richtung des oberen Endes der Säule (14) der Fördervorrichtung,
und diese Funktionseinheit aus der Deckelbeschickermaschine mit Förderer (3) des Standardtyps besteht und die Fördervorrichtung ein wirklich integrierbares Produkt in einer Fließbandabfüllanlage bildet.
